(19) Europäisches Patentamt / European Patent Office / Office européen des brevets

(11) **EP 3 213 333 B1**

(12) **EUROPEAN PATENT SPECIFICATION**

(45) Date of publication and mention
of the grant of the patent:
**10.06.2020 Bulletin 2020/24**

(21) Application number: **15794004.0**

(22) Date of filing: **30.10.2015**

(51) Int Cl.:
*H01G 11/28* *(2013.01)*     *H01G 11/36* *(2013.01)*
*H01G 11/38* *(2013.01)*     *H01G 11/46* *(2013.01)*

(86) International application number:
**PCT/US2015/058277**

(87) International publication number:
**WO 2016/070020 (06.05.2016 Gazette 2016/18)**

(54) **SUPERCAPACITOR ELECTRODES INCLUDING GRAPHENIC CARBON PARTICLES**

SUPERKONDENSATORELEKTRODE MIT GRAPHENKOHLENSTOFFPARTIKELN

ÉLECTRODES DE SUPERCONDENSATEUR COMPRENANT DES PARTICULES DE CARBONE GRAPHÉNIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2014 US 201462073298 P**

(43) Date of publication of application:
**06.09.2017 Bulletin 2017/36**

(73) Proprietor: **PPG Industries Ohio, Inc.**
**Cleveland, OH 44111 (US)**

(72) Inventors:
• **ASAY, David B.**
  **Freeport, Pennsylvania 16229 (US)**
• **VANIER, Noel R.**
  **Wexford, Pennsylvania 15090 (US)**
• **ATMURI, Anand K.**
  **Wexford, Pennsylvania 15090 (US)**
• **HELLRING, Stuart D.**
  **Pittsburgh, Pennsylvania 15243 (US)**
• **HUNG, Cheng-Hung**
  **Wexford, Pennsylvania 15090 (US)**
• **KAHLE, Charles F.**
  **Pittsburgh, Pennsylvania 15237 (US)**
• **BURGMAN, John W.**
  **Brecksville, Ohio 44141 (US)**
• **YI, Ran**
  **State College, Pennsylvania 16801 (US)**

(74) Representative: **f & e patent**
**Braunsberger Feld 29**
**51429 Bergisch Gladbach (DE)**

(56) References cited:
**WO-A1-2008/051885      WO-A2-2007/050466**
**US-A1- 2012 026 643     US-A1- 2012 028 127**
**US-A1- 2012 300 364     US-A1- 2013 084 236**
**US-A1- 2013 280 601     US-A1- 2014 272 591**
**US-A1- 2014 299 818**

**Description**

CROSS REFERENCE TO RELATED APPLICATION

This application claims the benefit of U.S. Provisional Patent Application Serial No. 62/073,298 filed October 31, 2014.

FIELD OF THE INVENTION

The present invention relates to the use of graphenic carbon particles in supercapacitor electrodes.

BACKGROUND OF THE INVENTION

A large demand exists for high-power energy resources for use in various products such as portable electronic devices and electric vehicles. Supercapacitors offer a promising alternative to conventional capacitors and batteries for such uses. Compared with conventional capacitors, the specific energy of supercapacitors can be several orders of magnitude higher. In addition, supercapacitors are able to store energy and deliver power at relatively high rates beyond those accessible with batteries.
US 2014/299818 A1 relates to high surface area nano sized graphene and carbon compositions for electrochemical capacitors.
US 2012/0028127 A1 concerns an electrode comprising likewise conventional graphene, titanium dioxide and a binder configured to facilitate binding together the graphene and titanium dioxide.
US 2013/084236 A1 relates to a method and an apparatus for making graphenic carbon particles by a thermal process comprising heating a hydrocarbon precursor material in a thermal zone.
US 2014/272591 A1 relates to a lithium ion battery anode material comprising lithium-reactive metal particles, graphenic carbon particles and a binder.

SUMMARY OF THE INVENTION

The present invention relates to a supercapacitor electrode as defined in appended independent claim 1. The appended dependent claims relate to some specific embodiments of the supercapacitor electrode according to the present invention. The supercapacitor electrode according to the present invention comprises: a conductive foil substrate layer; and electrode coating layers on opposite sides of the conductive foil substrate layer, wherein each electrode coating layer comprises: active charge supporting particles; graphenic carbon particles; and a binder. A supercapacitor comprising such an electrode is also provided. The supercapacitor according to the present invention is as defined in appended independent claim 8.
For example, the electrode coating layers can comprise: from 50 to 95 weight percent active carbon particles; from 1 to 10 weight percent thermally produced graphenic carbon particles; and from 1 to 15 weight percent binder.

BRIEF DESCRIPTION OF THE DRAWINGS

Fig. 1 is a partially schematic side view of a supercapacitor in the form of a test coin cell including electrodes comprising graphenic carbon particles in accordance with an embodiment of the present invention.
Fig. 2 is a partially schematic side sectional view of a supercapacitor electrode in accordance with an embodiment of the present invention comprising a conductive foil layer with electrode coating layers on opposite sides thereof.
Fig. 3 is a graph illustrating linear charge and discharge characteristics of a supercapacitor test coin cell comprising electrodes with graphenic carbon particles as the active component of the electrode coating layers.
Fig. 4 is a graph of specific capacitance versus total coating loading for electrodes including activated carbon particles alone or in combination with graphenic carbon particles.
Fig. 5 is a graph of applied voltage versus time for electrodes including activated carbon particles and different types of graphenic carbon particles.
Fig. 6 is a graph of applied voltage versus time for electrodes including activated carbon particles and different types of graphenic carbon particles.
Fig. 7 is a Nyquist plot for electrodes including activated carbon particles alone or in combination with graphenic carbon particles.

DETAILED DESCRIPTION

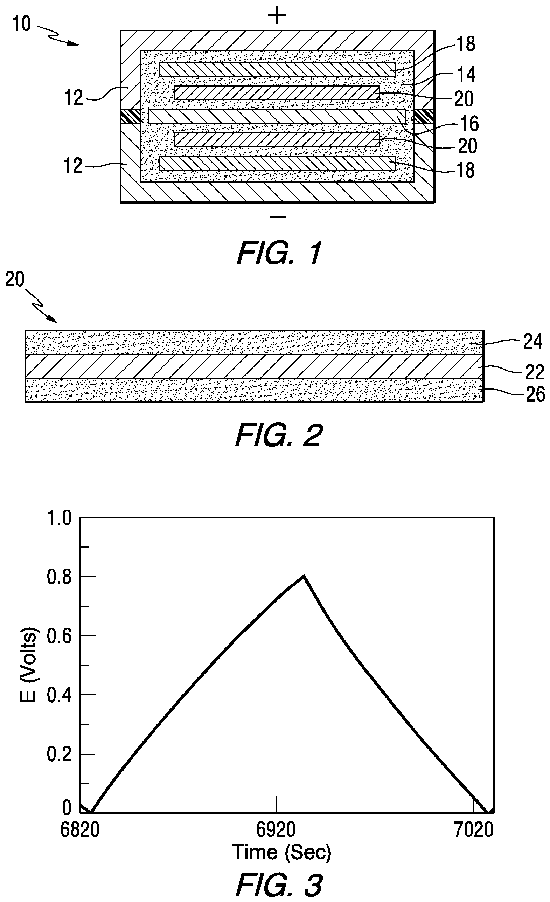

Fig. 1 schematically illustrates a supercapacitor in the form of a test coin cell 10 including a stainless steel case 12 with two parts separated by an insulator ring, electrolyte 14, separator 16, spacers 18 and electrodes 20. In accordance with embodiments of the invention, one or more of the electrodes 20 may include graphenic carbon particles. The other components of the test coin cell capacitor 10, such as the electrolyte 14, separator 16 and spacers 18 may be made of any suitable conventional materials, as known to those skilled in the art.

As schematically shown in Fig. 2, a supercapacitor electrode 20 includes a conductive foil layer 22 having electrode coating layers 24 and 26 applied on opposite sides thereof. The conductive foil layer 22 may be made of any suitable conductive material such as aluminum or the like. The conductive foil layer 22 may have any suitable thickness, for example, from 5 to 25 microns, or from 10 to 20 microns. In a particular embodiment in accordance with the present invention, the conductive foil layer 22 comprises aluminum foil having a thickness of about 15 microns.

Each of the electrode layers 24 and 26 shown in Fig. 2 may have any suitable thicknesses, typically from 5 to 200 microns, e.g., from 10 to 120 microns, or from 20 to 100 microns. In the embodiment of the present invention shown in Fig. 2, each of the electrode coating layers 24 and 26 have the same thicknesses. However, the layers 24 and 26 may have different thicknesses in certain embodiments in accordance with the present invention.

In accordance with embodiments of the present invention, thermally produced graphenic carbon particles are included in the electrode coating layers 24 and 26. Graphenic carbon particles have large specific surface area and exceptionally high electronic qualities, making such particles useful in supercapacitor applications. The graphenic carbon particles may be combined with active charge supporting particles such as activated carbon and/or transition metal oxides for use in supercapacitor electrodes. Additional electrically conductive particles such as carbon black may optionally be added to such electrode materials. The electrode coating layers 24 and 26 include according to the present invention active charge supporting particles, graphenic carbon particles, and a binder, as more fully described below.

As used herein, the term "supercapacitor" means capacitors having capacitance values greater than 1,000 farads at 1.2 volt. Supercapacitor electrodes of the present invention have been found to provide significantly improved capacitive properties such as specific capacitance. Specific capacitance is the capacitance per unit mass for one electrode and is calculated by the following equation:

$$C_{sp} \; (F/g) = 4It/Vm$$

where I is the discharge current (A), t is the discharge duration (second), V is the voltage window (V) and m is the total mass (g) of the active material in both electrodes.

In accordance with certain embodiments of the present invention, each supercapacitor electrode 20 has a specific capacitance of at least 75 F/g at a current density of 1 A/g for relatively thin electrodes with a mass loading of 1 mg/cm$^2$ of active material per electrode, for example, at least 100 F/g, or at least 110 F/g. Furthermore, in accordance with embodiments of the present invention, the supercapacitor electrodes 20 may have a typical specific energy density of at least 1 Wh/kg, or at least 2 Wh/kg. For example, the specific energy density of each electrode 20 may range from 2 to 20 Wh/kg or from 6 to 15 Wh/kg.

In certain embodiments of the present invention, the electrode coating layers 24 and 26 of the supercapacitor electrodes 20 include active charge supporting particles comprising activated carbon. The activated carbon particles typically comprise from 50 to 95 weight percent of the electrode coating material, for example, from 60 to 90 percent activated carbon, or from 70 to 85 percent activated carbon. In a particular embodiment of the present invention, the activated carbon comprises 80 weight percent of the electrode coating material. The activated carbon particles may be of any suitable size, for example, the average particle size of the activated carbon particles may typically range from 0.5 to 50 microns, or from 1 to 10 microns.

Graphenic carbon particles are added with the activated carbon particles in the conductive coating material in amounts of from 1 to 10 weight percent of the conductive coating material, for example, from 2 to 10 weight percent.

While some commercial supercapacitors have used activated carbon, which has advantages of low cost and high capacitance at low current densities, it suffers from poor retention of specific capacitance at high current densities due to the low electrical conductivity deriving from its highly amorphous nature. This limits the power density of supercapacitors with activated carbon electrodes. In accordance with embodiments of the invention, the superior electrical conductivity and unique structure of thermally produced graphenic carbon particles make it a superior additive for activated carbon by acting as conductive bridges between activated carbon particles, thereby improving the conductivity and power density of activated carbon.

In addition to the activated carbon and graphenic carbon particles, the electrode coating compositions of the present invention include a binder. The electrode coating compositions may comprise the binder in a typical amount of up to 20 weight percent, for example, from 1-15 weight percent, or from 2-10 weight percent. Any suitable binder may be used, such as vinyls, latexes, acrylates, cellulosic binders, and conductive polymers. For example, the binder may comprise polyvinylidene fluoride (PVDF), styrene-butadiene rubber (SBR) latex, sodium carboxymethyl cellulose (CMC), polyaniline, polyacrylonitrile or the like. The binder may be used as a solid in a powder coating formulation, or in a liquid coating formulation as a dispersion in a solvent or as a dissolved binder material.

In certain embodiments of the present invention, conductive carbon black may be added with the activated carbon and graphenic carbon particles in the conductive coating material in typical amounts of up to 20 weight percent based on the weight of the electrode coating composition, for example, from 1 to 15 weight percent, or from 2 to 10 weight percent, or from 5 to 8 weight percent. Typical average particle sizes of the conductive carbon black typically range from 0.5 to 50 microns, for example, from 1 to 10 microns.

In embodiments of the present invention in which graphenic carbon particles and conductive carbon black are used, the relative weight percentages thereof may be controlled. For example, the graphenic carbon particles may comprise from 20 to 80 weight percent of the combined weight of the graphenic carbon particles and conductive carbon black, for example, from 20 to 50 weight percent. The conductive carbon black may typically comprise from 20 to 80 weight percent of the combined weight of the graphenic carbon particles and conductive carbon black, for example, from 50 to 80 weight percent.

In certain embodiments of the present invention, the active charge supporting particles may comprise transition metal oxides such as manganese oxide ($MnO_2$), iron oxide ($Fe_2O_3$, $Fe_3O_4$), and the like. In this embodiment, the transition metal oxide particles may typically comprise 40 to 90 weight percent of the total weight of the electrode coating, for example, from 60 to 80 weight percent. When such transition metal oxides are used, the amount of graphenic carbon particles may typically range from 10 to 60 weight percent, for example, from 20 to 40 weight percent. Typical average particles sizes of the transition metal oxide particles may range from 0.05 to 10 microns, for example, from 0.1 to 2 microns.

In certain embodiments of the present invention, the active charge supporting particles, graphenic carbon particles, binder and optional conductive carbon black particles are dispersed in a solvent and applied to the conductive foil substrate layer 22 by a coating process and converted into a dry film 24, 26 before being used in a supercapacitor. Conversion from a liquid formulation or a powder formulation into a dry and cured film may be accomplished by any suitable method such as oven heating.

As used herein, the term "graphenic carbon particles" means carbon particles having structures comprising one or more layers of one-atom-thick planar sheets of $sp^2$-bonded carbon atoms that are densely packed in a honeycomb crystal lattice. The average number of stacked layers may be less than 100, for example, less than 50. In certain embodiments of the present invention, the average number of stacked layers is 30 or less, such as 20 or less, 10 or less, or, in some cases, 5 or less. The graphenic carbon particles may be substantially flat, however, at least a portion of the planar sheets may be substantially curved, curled, creased or buckled. The particles typically do not have a spheroidal or equiaxed morphology.

In certain embodiments of the present invention, the graphenic carbon particles have a thickness, measured in a direction perpendicular to the carbon atom layers, of no more than 10 nanometers, no more than 5 nanometers, or, in certain embodiments of the present invention, no more than 4 or 3 or 2 or 1 nanometers, such as no more than 3.6 nanometers. In certain embodiments of the present invention, the graphenic carbon particles may be from 1 atom layer up to 3, 6, 9, 12, 20 or 30 atom layers thick, or more. In certain embodiments of the present invention, the graphenic carbon particles have a width and length, measured in a direction parallel to the carbon atoms layers, of at least 50 nanometers, such as more than 100 nanometers, in some cases more than 100 nanometers up to 500 nanometers, or more than 100 nanometers up to 200 nanometers. The graphenic carbon particles may be provided in the form of ultrathin flakes, platelets or sheets having relatively high aspect ratios (aspect ratio being defined as the ratio of the longest dimension of a particle to the shortest dimension of the particle) of greater than 3:1, such as greater than 10:1.

In certain embodiments of the present invention, the graphenic carbon particles have relatively low oxygen content. For example, the graphenic carbon particles may, even when having a thickness of no more than 5 or no more than 2 nanometers, have an oxygen content of no more than 2 atomic weight percent, such as no more than 1.5 or 1 atomic weight percent, or no more than 0.6 atomic weight, such as about 0.5 atomic weight percent. The oxygen content of the graphenic carbon particles can be determined using X-ray Photoelectron Spectroscopy, such as is described in D. R. Dreyer et al., Chem. Soc. Rev. 39, 228-240 (2010).

In certain embodiments of the present invention, the graphenic carbon particles have a B.E.T. specific surface area of at least 50 square meters per gram, such as 70 to 1000 square meters per gram, or, in some cases, 200 to 1000 square meters per grams or 200 to 400 square meters per gram. As used herein, the term "B.E.T. specific surface area" refers to a specific surface area determined by nitrogen adsorption according to the ASTMD 3663-78 standard based on the Brunauer-Emmett-Teller method described in the periodical "The Journal of the American Chemical Society", 60, 309 (1938).

In certain embodiments of the present invention, the graphenic carbon particles have a Raman spectroscopy 2D/G peak ratio of at least 1:1, for example, at least 1.2:1 or 1.3:1. As used herein, the term "2D/G peak ratio" refers to the ratio of the intensity of the 2D peak at 2692 cm$^{-1}$ to the intensity of the G peak at 1,580 cm$^{-1}$.

In certain embodiments of the present invention, the graphenic carbon particles have a relatively low bulk density. For example, the graphenic carbon particles are characterized by having a bulk density (tap density) of less than 0.2 g/cm³, such as no more than 0.1 g/cm³. For the purposes of the present invention, the bulk density of the graphenic carbon particles is determined by placing 0.4 grams of the graphenic carbon particles in a glass measuring cylinder having a readable scale. The cylinder is raised approximately one-inch and tapped 100 times, by striking the base of the cylinder onto a hard surface, to allow the graphenic carbon particles to settle within the cylinder. The volume of the particles is then measured, and the bulk density is calculated by dividing 0.4 grams by the measured volume, wherein the bulk density is expressed in terms of g/cm³.

In certain embodiments of the present invention, the graphenic carbon particles have a compressed density and a percent densification that is less than the compressed density and percent densification of graphite powder and certain types of substantially flat graphenic carbon particles such as those formed from exfoliated graphite. Lower compressed density and lower percent densification are each currently believed to contribute to better dispersion and/or rheological properties than graphenic carbon particles exhibiting higher compressed density and higher percent densification. In certain embodiments of the present invention, the compressed density of the graphenic carbon particles is 0.9 or less, such as less than 0.8, less than 0.7, such as from 0.6 to 0.7. In certain embodiments of the present invention, the percent densification of the graphenic carbon particles is less than 40%, such as less than 30%, such as from 25 to 30%.

For purposes of the present invention, the compressed density of graphenic carbon particles is calculated from a measured thickness of a given mass of the particles after compression. Specifically, the measured thickness is determined by subjecting 0.1 grams of the graphenic carbon particles to cold press under 15,000 pound of force in a 1.3 centimeter die for 45 minutes, wherein the contact pressure is 500 MPa. The compressed density of the graphenic carbon particles is then calculated from this measured thickness according to the following equation:

$$\text{Compressed Density (g/cm}^3) = \frac{0.1 \text{ grams}}{\Pi*(1.3\text{cm}/2)^2*(\text{measured thickness in cm})}$$

The percent densification of the graphenic carbon particles is then determined as the ratio of the calculated compressed density of the graphenic carbon particles, as determined above, to 2.2 g/cm³, which is the density of graphite.

In certain embodiments of the present invention, the graphenic carbon particles have a measured bulk liquid conductivity of at least 100 microSiemens, such as at least 120 microSiemens, such as at least 140 microSiemens immediately after mixing and at later points in time, such as at 10 minutes, or 20 minutes, or 30 minutes, or 40 minutes. For the purposes of the present invention, the bulk liquid conductivity of the graphenic carbon particles is determined as follows. First, a sample comprising a 0.5% solution of graphenic carbon particles in butyl cellosolve is sonicated for 30 minutes with a bath sonicator. Immediately following sonication, the sample is placed in a standard calibrated electrolytic conductivity cell (K=1). A Fisher Scientific AB 30 conductivity meter is introduced to the sample to measure the conductivity of the sample. The conductivity is plotted over the course of about 40 minutes.

In accordance with certain embodiments of the present invention, percolation, defined as long range interconnectivity, occurs between the conductive graphenic carbon particles. Such percolation may reduce the resistivity of the coating compositions. The conductive graphenic particles may occupy a minimum volume within the coating such that the particles form a continuous, or nearly continuous, network. In such a case, the aspect ratios of the graphenic carbon particles may affect the minimum volume required for percolation.

According to the present invention, at least a portion of the graphenic carbon particles to be dispersed in the compositions of the present invention are made by thermal processes. In accordance with the invention, thermally produced graphenic carbon particles are made from carbon-containing precursor materials that are heated to high temperatures in a thermal zone such as a plasma. As more fully described below, the carbon-containing precursor materials are heated to a sufficiently high temperature, above 3,500°C, to produce graphenic carbon particles having characteristics as described above. The carbon-containing precursor, such as a hydrocarbon provided in gaseous or liquid form, is heated in the thermal zone to produce the graphenic carbon particles in the thermal zone or downstream therefrom. For example, thermally produced graphenic carbon particles may be made by the systems and methods disclosed in U.S. Patent Nos. 8,486,363 and 8,486,364.

In certain embodiments of the present invention, the thermally produced graphenic carbon particles may be made by using the apparatus and method described in U.S. Patent No. 8,486,363 at [0022] to [0048] in which (i) one or more hydrocarbon precursor materials capable of forming a two-carbon fragment species (such as n-propanol, ethane, ethylene, acetylene, vinyl chloride, 1,2-dichloroethane, allyl alcohol, propionaldehyde, and/or vinyl bromide) is introduced into a thermal zone (such as a plasma), and (ii) the hydrocarbon is heated in the thermal zone to form the graphenic carbon particles. In other embodiments of the present invention, the thermally produced graphenic carbon particles may be made by using the apparatus and method described in U.S. Patent No. 8,486,364 at [0015] to [0042] in which (i) a methane precursor material (such as a material comprising at least 50 percent methane, or, in some cases, gaseous or liquid methane of at least 95 or 99 percent purity or higher) is introduced into a thermal zone (such as a plasma), and (ii) the methane precursor is heated in the thermal zone to form the graphenic carbon particles. Such methods can produce graphenic carbon particles having at least some, in some cases all, of the characteristics described above.

During production of the graphenic carbon particles by the thermal production methods described above, a carbon-containing precursor is provided as a feed material that may be contacted with an inert carrier gas. The carbon-containing precursor material may be heated in a thermal zone, for example, by a plasma system. The precursor material is heated to a temperature of at least 3,500°C, for example, from a temperature of greater than 3,500°C or 4,000°C up to 10,000°C or 20,000°C. Although the thermal zone may be generated by a plasma system, it is to be understood that any other suitable heating system may be used to create the thermal zone, such as various types of furnaces including electrically heated tube furnaces and the like.

The gaseous stream may be contacted with one or more quench streams that are injected into the plasma chamber through at least one quench stream injection port. The quench stream may cool the gaseous stream to facilitate the formation or control the particle size or morphology of the graphenic carbon particles. In certain embodiments of the invention, after contacting the gaseous product stream with the quench streams, the ultrafine particles may be passed through a converging member. After the graphenic carbon particles exit the plasma system, they may be collected. Any suitable means may be used to separate the graphenic carbon particles from the gas flow, such as, for example, a bag filter, cyclone separator or deposition on a substrate.

In certain embodiments, at least a portion of the graphenic carbon particles may be obtained from commercial sources, for example, from Angstron, XG Sciences and other commercial sources. In such embodiments, the commercially available graphenic carbon particles may comprise exfoliated graphite and have different characteristics in comparison with the thermally produced graphenic carbon particles, such as different size distributions, thicknesses, aspect ratios, structural morphologies, oxygen contents, and chemical functionalities at the basal planes/edges.

In certain embodiments of the present invention, different types of graphenic carbon particles may be co-dispersed in the composition. For example, when thermally produced graphenic carbon particles are combined with commercially available graphenic carbon particles in accordance with embodiments of the invention, a bi-modal distribution, tri-modal distribution, etc. of graphenic carbon particle characteristics may be achieved. The graphenic carbon particles contained in the compositions may have multi-modal particle size distributions, aspect ratio distributions, structural morphologies, edge functionality differences, oxygen content, and the like.

In an embodiment of the present invention in which both thermally produced graphenic carbon particles and commercially available graphenic carbon particles, e.g., from exfoliated graphite, are co-dispersed and added to a coating composition to produce a bi-modal graphenic particle size distribution, the relative amounts of the different types of graphenic carbon particles are controlled to produce desired conductivity properties of the coatings. For example, the thermally produced graphenic particles may comprise from 1 to 50 weight percent, and the commercially available graphenic carbon particles may comprise from 50 to 99 weight percent, based on the total weight of the graphenic carbon particles. In certain embodiments of the present invention, the thermally produced graphenic carbon particles may comprise from 2 or 4 to 40 weight percent, or from 6 or 8 to 35 weight percent, or from 10 to 30 weight percent. When co-dispersions of the present invention having such relative amounts of thermally produced graphenic carbon particles and commercially available graphenic carbon particles are incorporated in coatings, inks, or other materials, such materials may exhibit significantly increased electrical conductivities in comparison with similar materials containing mixtures of such types of graphenic carbon particles at similar ratios. For example, the co-dispersions may increase electrical conductivity by at least 10 or 20 percent compared with the mixtures. In certain embodiments of the present invention, the electrical conductivity may be increased by at least 50, 70 or 90 percent, or more.

In certain embodiments of the present invention, the graphenic carbon particles are functionalized. As used herein, "functionalized", when referring to graphenic carbon particles, means covalent bonding of any non-carbon atom or any organic group to the graphenic carbon particles. The graphenic carbon particles may be functionalized through the formation of covalent bonds between the carbon atoms of a particle and other chemical moieties such as carboxylic acid groups, sulfonic acid groups, hydroxyl groups, halogen atoms, nitro groups, amine groups, aliphatic hydrocarbon groups, phenyl groups and the like. For example, functionalization with carbonaceous materials may result in the formation of carboxylic acid groups on the graphenic carbon particles. The graphenic carbon particles may also be functionalized by other reactions such as Diels-Alder addition reactions, 1,3-dipolar cycloaddition reactions, free radical addition reactions and diazonium addition reactions. In certain embodiments of the present invention, the hydrocarbon and phenyl groups may be further functionalized. If the graphenic carbon particles already have some hydroxyl functionality, the functionality can be modified and extended by reacting these groups with, for example, an organic isocyanate.

The following examples are useful to understand and intended to illustrate various aspects of the invention, account taken that the scope of the invention is set forth with the appended claims.

Example 1

A coin cell configuration as shown in Fig. 1 was used to represent the physical configuration, internal voltages and charge transfer that occurs in a packaged supercapacitor in order to provide an indication of the performance of the electrode material. Two identical electrodes with the same mass loading were used for testing. The electrodes included thermally produced graphenic carbon particles as the sole active material (80 wt%), conductive carbon black (10 wt%) and a PVDF binder (10 wt%) applied on opposite sides of an aluminum foil layer. The electrolyte was KCl in water.

Fig. 3 shows the typical charge/discharge curve at 100 mA/g of thermally produced graphenic carbon particles with specific surface area (SSA) of 416 $m^2$/g. The charge curve and discharge curves are nearly linear, indicating ideal capacitive behaviors. The specific capacitance of thermally produced graphenic carbon particles is 25 F/g, which is lower than commercial active carbons with SSA ranging from 1,000 to 3,500 $m^2$/g. However, the theoretical specific capacitance of the thermally produced graphenic carbon particles is calculated to be 88 F/g (416/2600*550), which is higher than the measured specific capacitance.

Example 2

To investigate the effects of thermally produced graphenic carbon particles in electrodes comprising activated carbon, six samples including those with different ratios of thermally produced graphenic carbon particles (TPGC) and Super C conductive carbon black, and commercial graphenic carbon particles as comparisons (Table 1) were prepared and tested. The active charge supporting particles of each electrode were commercially available YP-80F activated carbon particles. The specific capacitance is calculated based on the mass of activated carbon only.

Table 2 shows the performance of thin electrodes with mass loading of 1 mg/cm$^2$ per electrode and typical thickness of 15 $\mu$m. In general, introduction of graphenic carbon particles increases specific capacitance and decreases internal resistance (IR) compared to pure conductive carbon at both low and high current densities. The difference is more striking at a high current density of 1 A/g. Sample 3 with 5 wt% thermally produced graphenic carbon particles delivers a capacitance of 112 F/g, which doubles that of pure conductive carbon (55 F/g). Increasing the thermally produced graphenic carbon particles to higher loading adversely affects the performance as demonstrated by sample 4 due to decreased conductivity. The preferred mass content of thermally produced graphenic carbon particles should be in the range of about 2 to 5 weight percent. The electrode including commercially available M5 graphene produced acceptable results, but the electrode including commercially available C300 graphene produced less favorable results.

Table 1

| Formulas of Electrode Coatings | | | | |
|---|---|---|---|---|
| Sample | YP-80F (g) | Graphene (g) | Super C (g) | 2 wt% PVDF/NMP (g) |
| 1 | 0.8 | 0 | 0.1 | 5 |
| 2 | 0.8 | TPGC 0.02 | 0.08 | 5 |
| 3 | 0.8 | TPGC 0.05 | 0.05 | 5 |
| 4 | 0.8 | TPGC 0.08 | 0.02 | 5 |
| 5 | 0.8 | M5 0.05 | 0.05 | 5 |
| 6 | 0.8 | C300 0.05 | 0.05 | 5 |

Table 2

| Performance of Thin Electrodes | | | | |
|---|---|---|---|---|
| Sample | Capacitance (F/g) | | IR drop (V) | |
| | 0.1 A/g | 1 A/g | 0.1 A/g | 1 A/g |
| 1 | 102 | 55 | 0.02 | 0.22 |
| 2 | 145 | 108 | 0.01 | 0.11 |
| 3 | 150 | 112 | 0.01 | 0.11 |
| 4 | 132 | 75 | 0.02 | 0.23 |

(continued)

| Performance of Thin Electrodes | | | | |
| --- | --- | --- | --- | --- |
| Sample | Capacitance (F/g) | | IR drop (V) | |
| | 0.1 A/g | 1 A/g | 0.1 A/g | 1 A/g |
| 5 | 131 | 108 | 0.01 | 0.06 |
| 6 | 146 | 67 | 0.02 | 0.29 |

Example 3

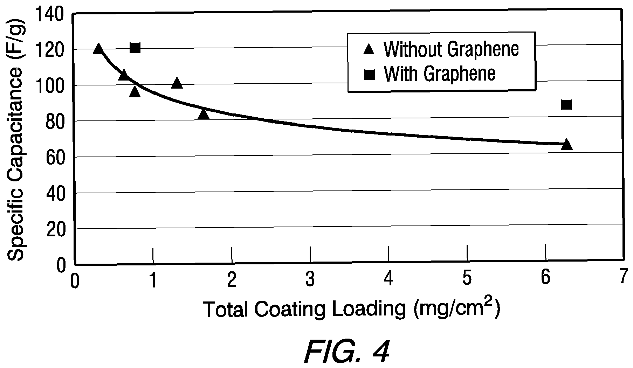

Relatively thick electrodes were fabricated and evaluated. Carbon-coated Al foil (from Exopack) was used to enhance the adhesion. The electrodes have mass loadings of about 6.0 mg/cm$^2$ and thicknesses of about 115 $\mu$m. Overall, each electrode has lower capacitance at the same current density compared to its thin counterpart. As shown in Table 3 and Fig. 4, pure conductive carbon exhibits a low capacitance of 63.5 F/g at 1st cycle and has severe fading. In addition, the IR drop is large and increases upon cycling. In contrast, conductive carbon with thermally produced graphenic carbon particles shows higher capacitance with stable cyclability and much lower IR drop. Electrodes with thermally produced graphenic carbon particles also show higher capacitance at a high current density of 1A/g. Similar results were obtained with the electrodes including commercially available M5 and C300 graphene. The electrode with 8 weight percent thermally produced graphenic carbon particles has the lowest capacitance and highest IR drop among electrodes with thermally produced graphenic carbon particles, which confirms that the optimal thermally produced graphenic carbon particles content should range from about 2 to 5 weight percent.

Table 3

| Performance of Thick Electrodes | | | |
| --- | --- | --- | --- |
| Sample | Mass loading (mg/cm$^2$) | Capacitance (F/g) | IR drop (V) |
| 1 | 6.3 | 63.5 (1st) 40 (30th) | 0.23 (1st) 0.42 (30th) |
| 2 | 6.4 | 87 | 0.06 |
| 3 | 6.0 | 87 | 0.08 |
| 4 | 6.3 | 84 | 0.09 |
| 5 | 7.1 | 72 | 0.07 |
| 6 | 6.0 | 84 | 0.1 |

Example 4

Thick electrodes of the same composition were also made and tested using a different carbon-coated Al foil (from MTI). As shown in Table 4, the difference between graphenic carbon particle-free and thermally produced graphenic carbon particle-containing electrodes is less pronounced in terms of capacitance. However, the electrode with 2 weight percent thermally produced graphenic carbon particles (Sample 2) shows lower IR drop at both low and high current densities than graphenic carbon particle-free electrode (sample 1), indicating an improvement in conductivity of the electrode.

Table 4

| Performance of Thick Electrodes | | | | | |
| --- | --- | --- | --- | --- | --- |
| Sample | Mass loading (mg/cm$^2$) | Capacitance (F/g) | | IR drop (V) | |
| | | 0.1 A/g | 1 A/g | 0.1 A/g | 1 A/g |
| 1 | 5.8 | 90 | 80 | 0.01 | 0.1 |
| 2 | 5.8 | 90 | 80 | <0.01 | 0.06 |
| 3 | 6 | 93 | 74 | 0.013 | 0.12 |

(continued)

| Performance of Thick Electrodes | | | | | |
| --- | --- | --- | --- | --- | --- |
| Sample | Mass loading (mg/cm$^2$) | Capacitance (F/g) | | IR drop (V) | |
| | | 0.1 A/g | 1 A/g | 0.1 A/g | 1 A/g |
| 4 | 5.9 | 83 | 45 | 0.028 | 0.3 |
| 5 | 6.3 | 84 | 71 | 0.01 | 0.1 |
| 6 | 6.1 | 88 | 53 | 0.014 | 0.14 |

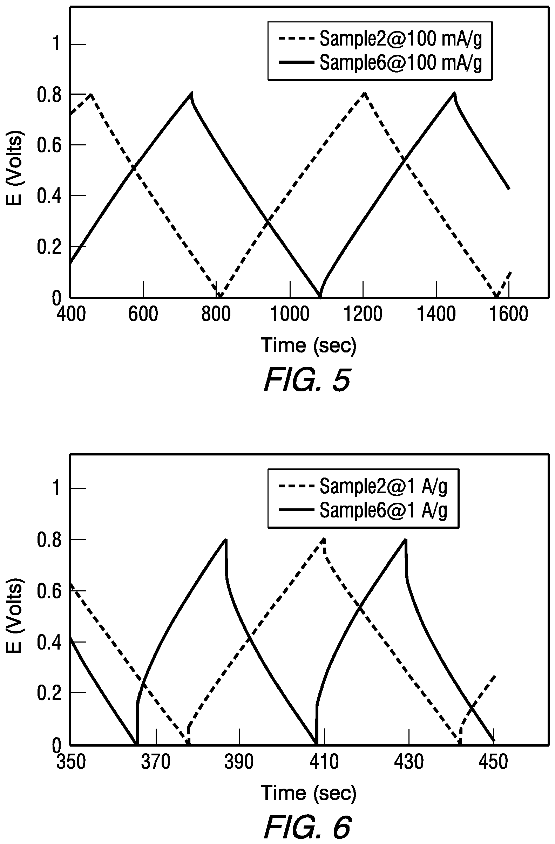

Figs. 5 and 6 show charge/discharge curves of electrodes made of Samples 2 and 6 (Table 4). As shown in Fig. 5, at low current density (100 mA/g) both of the samples show symmetric charge and discharge cycles, but with Sample 2 showing a comparatively lesser IR drop than Sample 6. As shown in Fig. 6, at a higher current density (1 A/g), Sample 2 sustains the symmetric charge and discharge cycle profile (more linear), but the profile of Sample 6 turns asymmetric (and curved), which shows cyclic instability. Also, there is a significant drop in specific capacitance for Sample 6 which also confirms this behavior (see Table 4).

Example 5

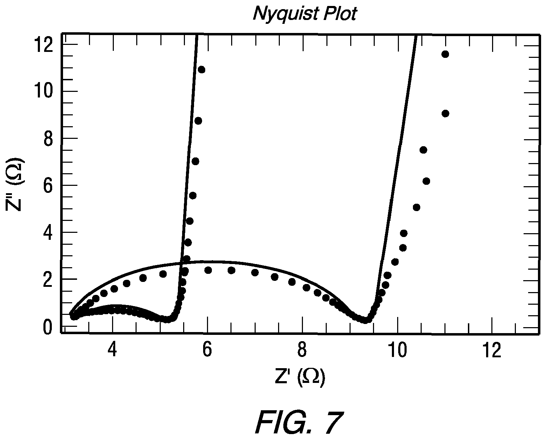

Impedance spectroscopy was performed on electrodes containing activated carbon particles (Sample 1) and activated carbon particles with thermally produced graphenic carbon particles (Sample 2). The results are shown in the Nyquist plot of Fig. 7. With the addition of thermally produced graphenic carbon particles as an additive there is a decrease in impedance which indicates less resistance and leads to higher specific capacitance.

In accordance with embodiments of the invention, introducing thermally produced graphenic carbon particles effectively maintains the capacitance of activated carbon at high current densities and increases capacitance for thick electrodes by increasing overall electrical conductivity of the whole electrodes. Such an effect becomes less pronounced when highly conductive substrate is used. Also, such improvements are not limited to thermally produced graphenic carbon particles as commercial graphenic carbon particles such as M5 can also achieve similar results.

For purposes of this detailed description, it is to be understood that the invention may assume various alternative variations and step sequences, except where expressly specified to the contrary. Moreover, other than in any operating examples, or where otherwise indicated, all numbers expressing, for example, quantities of ingredients used in the specification and claims are to be understood as being modified in all instances by the term "about". Accordingly, unless indicated to the contrary, the numerical parameters set forth in the following specification and attached claims are approximations that may vary depending upon the desired properties to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard variation found in their respective testing measurements.

Also, it should be understood that any numerical range recited herein is intended to include all sub-ranges subsumed therein. For example, a range of "1 to 10" is intended to include all sub-ranges between (and including) the recited minimum value of 1 and the recited maximum value of 10, that is, having a minimum value equal to or greater than 1 and a maximum value of equal to or less than 10.

In this application, the use of the singular includes the plural and plural encompasses singular, unless specifically stated otherwise. In addition, in this application, the use of "or" means "and/or" unless specifically stated otherwise, even though "and/or" may be explicitly used in certain instances.

It will be readily appreciated by those skilled in the art that modifications may be made to the invention without departing from the scope of the invention as set forth with the appended claims. Accordingly, the particular embodiments described in detail herein are illustrative only with the scope of the invention being set forth with the appended claims.

**Claims**

1.   A supercapacitor electrode (20) comprising:

a conductive foil substrate layer (22); and
electrode coating layers (24, 26) on opposite sides of the conductive foil substrate layer (22), wherein each electrode coating layer (24, 26) comprises:

active charge supporting particles;
from 1 to 10 weight percent thermally produced graphenic carbon particles, wherein the thermally produced graphenic carbon particles are made from a carbon-containing precursor that is heated to a temperature above 3,500°C in a thermal zone to produce the graphenic carbon particles; and
a binder.

2. The supercapacitor electrode (20) of Claim 1, wherein the active charge supporting particles comprise activated carbon or a transition metal oxide.

3. The supercapacitor electrode (20) of Claim 1, wherein the active charge supporting particles comprise activated carbon in an amount of from 60 to 90 weight percent of each of the electrode coating layers (24, 26).

4. The supercapacitor electrode (20) of Claim 1, wherein the thermally produced graphenic carbon particles comprise from 2 to 5 weight percent of each of the electrode coating layers (24, 26).

5. The supercapacitor electrode (20) of Claim 1, wherein the binder comprises from 1 to 15 weight percent of each of the electrode coating layers (24, 26).

6. The supercapacitor electrode (20) of Claim 1, wherein each of the electrode coating layers (24, 26) further comprises conductive carbon black in an amount of up to 20 weight percent of the electrode coating layer (24, 26).

7. The supercapacitor electrode (20) of Claim 6, wherein the weight ratio of the thermally produced graphenic carbon particles to the conductive carbon black is 50 percent or less.

8. A supercapacitor comprising a supercapacitor electrode (20) of Claim 1.


**Patentansprüche**

1. Eine Superkondensatorelektrode (20) umfassend:

eine leitfähige Foliensubstratschicht (22), und
Elektrodenbeschichtungsschichten (24, 26) auf gegenüberliegenden Seiten der leitfähigen Foliensubstratschicht (22), wobei jede Elektrodenbeschichtungsschicht (24, 26) umfasst:

aktive ladungstragende Teilchen,
von 1 bis 10 Gew.-% thermisch hergestellt graphenische Kohlenstoffteilchen, wobei die thermisch hergestellten graphenischen Kohlenstoffteilchen aus einem Kohlenstoff enthaltenden Vorläufer gemacht wurden, der auf eine Temperatur über 3.500 °C in einer thermischen Zone erhitzt wird, um die graphenischen Kohlenstoffteilchen herzustellen, und
ein Bindemittel.

2. Die Superkondensatorelektrode (20) des Anspruchs 1, wobei die aktiven ladungstragenden Teilchen Aktivkohle oder ein Übergangsmetalloxid umfassen.

3. Die Superkondensatorelektrode (20) des Anspruchs 1, wobei die aktiven ladungstragenden Teilchen Aktivkohle in einer Menge von 60 bis 90 Gew.-% von jeder der Elektrodenbeschichtungsschichten (24, 26) umfassen.

4. Die Superkondensatorelektrode (20) des Anspruchs 1, wobei die thermisch hergestellten graphenischen Kohlenstoffteilchen von 2 bis 5 Gew.-% von jeder der Elektrodenbeschichtungsschichten (24, 26) umfassen.

5. Die Superkondensatorelektrode (20) des Anspruchs 1, wobei das Bindemittel von 1 bis 15 Gew.-% von jeder der Elektrodenbeschichtungsschichten (24, 26) umfasst.

**6.** Die Superkondensatorelektrode (20) des Anspruchs 1, wobei jede der Elektrodenbeschichtungsschichten (24, 26) des Weiteren leitfähigen Industrieruß in einer Menge von bis zu 20 Gew.-% der Elektrodenbeschichtungsschicht (24, 26) umfasst.

**7.** Die Superkondensatorelektrode (20) des Anspruchs 6, wobei das Gewichtsverhältnis der thermisch hergestellten graphenischen Kohlenstoffteilchen zu dem leitfähigen Industrieruß 50 Prozent oder weniger beträgt.

**8.** Ein Superkondensator umfassend eine Superkondensatorelektrode (20) gemäß Anspruch 1.

**Revendications**

**1.** Electrode (20) de supercondensateur, comprenant :

   - une couche (22) de substrat-feuille conducteur,
   - et des couches (24, 26) de revêtement d'électrode, placées sur les faces opposées de la couche (22) de substrat-feuille conducteur, lesquelles couches (24, 26) de revêtement d'électrode comprennent chacune

      - des particules actives porteuses de charges,
      - de 1 à 10 % en poids de particules de carbone sous forme graphène, produites par voie thermique, lesquelles particules de carbone sous forme graphène produites par voie thermique ont été préparées à partir d'un précurseur contenant du carbone, qu'on a chauffé à une température de plus de 3500 °C dans une zone thermique pour produire les particules de carbone sous forme graphène,
      - et un liant.

**2.** Electrode (20) de supercondensateur, conforme à la revendication 1, dans laquelle les particules actives porteuses de charges comprennent du charbon actif ou un oxyde de métal de transition.

**3.** Electrode (20) de supercondensateur, conforme à la revendication 1, dans laquelle les particules actives porteuses de charges comprennent du charbon actif en une quantité représentant de 60 à 90 % du poids de chacune des couches (24, 26) de revêtement d'électrode.

**4.** Electrode (20) de supercondensateur, conforme à la revendication 1, dans laquelle les particules de carbone sous forme graphène produites par voie thermique représentent de 2 à 5 % du poids de chacune des couches (24, 26) de revêtement d'électrode.

**5.** Electrode (20) de supercondensateur, conforme à la revendication 1, dans laquelle le liant représente de 1 à 15 % du poids de chacune des couches (24, 26) de revêtement d'électrode.

**6.** Electrode (20) de supercondensateur, conforme à la revendication 1, dans laquelle chacune des couches (24, 26) de revêtement d'électrode comprend en outre du noir de carbone conducteur, en une quantité représentant jusqu'à 20 % du poids de la couche (24, 26) de revêtement d'électrode.

**7.** Electrode (20) de supercondensateur, conforme à la revendication 6, dans laquelle la proportion, en poids, des particules de carbone sous forme graphène produites par voie thermique au noir de carbone conducteur est inférieure ou égale à 50 %.

**8.** Supercondensateur comprenant une électrode (20) de supercondensateur conforme à la revendication 1.

FIG. 1

FIG. 2

FIG. 3

FIG. 4

FIG. 5

FIG. 6

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62073298
- US 2014299818 A1
- US 20120028127 A1
- US 2013084236 A1
- US 2014272591 A1
- US 8486363 B
- US 8486364 B

**Non-patent literature cited in the description**

- **D. R. DREYER et al.** *Chem. Soc. Rev.,* 2010, vol. 39, 228-240
- *The Journal of the American Chemical Society,* 1938, vol. 60, 309